# EUROPÄISCHE PATENTANMELDUNG

(11) **EP 0 816 453 A2**
(43) Veröffentlichungstag der Anmeldung: **07.01.1998**
(21) Anmeldenummer: 97110185.2
(22) Anmeldetag: 21.06.1997
(51) Int. Cl.: C09D 163/00, C08G 59/50

(54) **Wässriges Überzugsmittel und dessen Verwendung zur Herstellung von Füllerschichten**

(30) Priorität: 25.06.1996 DE 19625344
(71) Anmelder: Herberts Gesellschaft mit beschränkter Haftung, 42285 Wuppertal (DE)
(72) Erfinder: Osterhold, Michael, Dr., 44805 Bochum (DE); Lenhard, Werner, Dr., 42109 Wuppertal (DE); Collong, Wilfried, Dr., 42929 Wermelskirchen (DE); Schlesing, Willi, 42115 Wuppertal (DE)
(74) Vertreter: Türk, Gille, Hrabal, Leifert

(57) **Zusammenfassung**

Wäßriges Überzugsmittel, enthaltend
I) einen oder mehrere Aminhärter,
II) ein oder mehrere wasserverdünnbare Epoxidharze,
III) ein oder mehrere Pigmente und/oder Füllstoffe sowie
IV) Wasser und gegebenenfalls ein oder mehrere Lösemittel und/oder lackübliche Additive,
wobei die Zusammensetzung des Überzugsmittels so gewählt ist, daß ein aus dem Überzugsmittel gebildeter gehärteter freier Film mit einer Schichtdicke zwischen 30 und 80 µm in einem Temperaturbereich von -50°C bis 150°C einen Speichermodul E' von 10⁸ bis 5 x 10⁹ Pa aufweist.

## Beschreibung

Die Erfindung betrifft Überzugsmittel auf Basis wäßriger Epoxid/Amin-Systeme, die eine sehr gute Schleifbarkeit aufweisen. Die Erfindung betrifft auch die Verwendung der Überzugsmittel als Füller in der Mehrschichtlackierung, insbesondere auf dem Gebiet der Fahrzeug- und Fahrzeugteilelackierung.

Aufgrund immer strenger werdender Umweltschutzauflagen gewinnen wäßrige Systeme zur Beschichtung von Gegenständen zunehmend an Bedeutung. Sie müssen sich in ihren Eigenschaften an konventionellen, d.h. lösemittelhaltigen Systemen messen lassen. Wasserverdünnbare Epoxidharzsysteme haben zunehmend unter den kalthärtenden Beschichtungsmitteln an Bedeutung gewonnen. Diese zweikomponentigen (2K) Systeme weisen hervorragende Eigenschaften auf, wie z.B. gute Trocknung und schnelle Durchhärtung, sehr gute Haftung auf den meisten Substraten, sehr gute Zwischenschichthaftung, guter Korrosionsschutz bei Metallen.

Es sind bereits verschiedene wäßrige Epoxid/Amin-Systeme auf unterschiedlicher Bindemittelbasis beschrieben worden. In der DE-A-36 43 751 werden beispielsweise spezielle Epoxidverbindungen auf Basis aromatischer Polyole beschrieben. In den EP-A-000 605, EP-A-387 418 und DE-A-43 44 510 werden verschiedene Aminhärter für wäßrige Epoxid-Systeme beschrieben, beispielsweise auf Basis von Aminourethanen oder auf Basis von speziellen Epoxid/Amin-Addukten. In der DE-A-41 23 860 werden übliche wäßrige Epoxid/Amin-Systeme genannte, die zusätzlich ein nichtionisches Polyurethanharz enthalten.

Nachteilig an den bekannten wäßrigen Epoxid-Amin-Systemen ist, daß daraus hergestellte Überzugsmittel insbesondere im trockenen Zustand eine ungenügende Schleifbarkeit aufweisen. Einerseits sind die erhaltenen Überzüge so hart, daß beim Schleifen ein genügend großer Abtrag nur unter großem zeitlichen Aufwand möglich ist bzw. ist mitunter überhaupt kein Schleifen möglich. Andererseits gibt es wäßrige Epoxid/Amin-Systeme, die durch ihre ausgeprägte Thermoplastizität beim Schleifen rasch erweichen und in kurzer Zeit ein Zusetzen des Schleifpapiers bewirken.

Aufgabe der Erfindung war es daher, wäßrige Füllerüberzugsmittel bereitzustellen, die Überzüge mit störungsfreien Oberflächen ergeben und die sowohl im nassen als auch insbesondere im trocknen Zustand sehr gut schleifbar sind, ohne dabei Qualitätseinbußen bezüglich der bekannten guten Eigenschaften dieser Systeme hinnehmen zu müssen.

Es hat sich gezeigt, daß diese Aufgabe gelöst wird durch Überzugsmittel auf der Basis wäßriger Epoxid/Amin-Systeme, wobei die fertigen Überzugsmittel so formuliert sind, daß sie bezüglich der viskoelastischen Eigenschaften bestimmten Speichermodul/Temperatur-Kriterien genügen.

Einen Gegenstand der Erfindung betreffen daher wäßrige Überzugsmittel enthaltend
I) einen oder mehrere Aminhärter,
II) ein oder mehrere wasserverdünnbare Epoxidharze,
III) ein oder mehrere Pigmente und/oder Füllstoffe sowie
IV) Wasser und gegebenenfalls ein oder mehrere organische Lösemittel und/oder lackübliche Additive,
wobei die Zusammensetzung des Überzugsmittels so gewählt ist, daß ein aus dem Überzugsmittel gebildeter gehärteter freier Film mit einer Schichtdicke zwischen 30 und 80 µm in einem Temperaturbereich von -50°C bis 150°C einen Speichermodul E' von 10⁸ Pa bis 5 x 10⁹ Pa, bevorzugt von 10⁸ bis 4 x 10⁹ Pa aufweist.

Überraschend wurde gefunden, daß wäßrige Füllerüberzugsmittel auf Basis von Epoxid/Amin-Systemen, die als fertiges Überzugsmittel das genannte Temperatur/Speichermodulverhalten zeigen, im nassen und insbesondere im trockenen Zustand eine hervorragende Schleifbarkeit aufweisen. Aus diesen Überzugsmitteln erhaltene Überzüge zeigen beim Schleifen einen genügend großen Materialabtrag und setzen auch das Schleifmedium, z.B. das Schleifpapier nicht zu.

Der sogenannte Speichermodul E' ist eine dem Fachmann geläufige und in der Literatur beschriebene viskoelastische Kennzahl, die unmittelbar die Elastizität eines Films beschreibt. Hohes E' bedeutet hierbei eine hohe Steifigkeit. Der Speichermodul E' kann mittels der dynamischen thermomechanischen Analyse ermittelt werden. Dabei wird die Reaktion des Materials auf eine sich periodisch ändernde Kraft gemessen. Mechanische Eigenschaften eines Polymerfilms bzw. einer Polymerschicht werden unter dynamischer Belastung als Funktion der Temperatur gemessen. Dabei können zur praktischen Messung verschiedene Methoden benutzt werden, wie sie in der Literatur beschrieben werden. Es kann beispielsweise so vorgegangen werden, daß ein kleiner Stempel (Durchmesser ca. 1 mm) mit einer periodischen Kraft, beispielsweise 0,1 N auf die Probe drückt. Gemessen wird die Deformation der Probe z.B. durch einen induktiven Wegaufnehmer. Die Deformation der Probe beträgt nur wenige Prozent, bevorzugt weniger als 1 %. Das ganze System kann durch einen Rechner gesteuert werden, der ebenfalls die Auswertung der Messung übernimmt. Mit Hilfe einer Temperiereinrichtung kann ein Temperaturbereich von beispielsweise -70°C bis +300°C überstrichen werden. Die Bestimmung der Speichermodule erfolgt üblicherweise bei einer Frequenz von 1 Hz. Neben dieser sogenannten Penetrationsmethode eignet sich insbesondere für Lackfilme beispielsweise auch die dynamische Zugmessung an freien Filmen zur Bestimmung von E'. Die Messungen können beispielsweise mit einem handelsüblichen dynamischen thermomechanischen Analysator, z.B. von der Fa. Perkin Elmer durchgeführt werden. Zur Durchführung der dynamischen Zugmessung werden aus dem zu untersuchenden Überzugsmittel freie Lackfilme gebildet. Dabei werden die Überzugsmittel beispielsweise durch Spritzapplikation auf eine Oberfläche aufgebracht, von der sie sich leicht ablösen lassen, beispielsweise auf Polypropylenblends. Die Trockenschichtdicke der gebildeten Filme beträgt 30 bis 80 µm, bevorzugt 60 bis 70 µm. Die Überzüge werden unter den für das jeweilige Überzugsmittel geeigneten Bedingungen gehärtet, beispielsweise bei Temperaturen von 15 bis 110°C, bevorzugt 40 bis 80°C während 15 Minuten bis 20 Stunden, bevorzugt 30 bis 80 Minuten. Anschließend wird der gebildete Film von dem Substrat abgelöst und auf die zur Messung gewünschte Abmessung gebracht, beispielsweise mittels eines Stanzwerkzeugs, beispielsweise auf eine Abmessung von 4 mm Breite und 15 mm Länge. Die Probe wird dann im Zugversuch mit einer periodischen Kraft belastet und die resultierende Deformation wird über den gewünschten Temperaturbereich von beispielsweise -70 bis +300°C gemessen. Die Messungen werden bevorzugt mit einer Belastungsfrequenz von 1 Hz und einer Aufheizrate von 10°C/Minute durchgeführt. Unter der Wirkung der sinusförmigen Kraft ist die Deformationsamplitude der untersuchten freien Filme um einen Phasenwinkel δ gegenüber der Kraftamplitude verschoben. Aus diesem funktionalen Zusammenhang zwischen Kraft und Deformation läßt sich der Speichermodul E' nach folgender Gleichung berechnen:
- E': = (σₒ/εₒ)cosδ εₒ = Maximalwert der Deformation
- σ: = F/A ε = Δℓ/ℓ
- F: = Kraft ℓ = Länge der Probe
- A: = Querschnittsfläche der Probe
- σₒ: = Maximalwert der mechanischen Spannung
- Δℓ: = Längenänderung bei der Dehnung
Dabei wird zur Durchführung der dynamischen thermomechanischen Analyse durch Zugmessung zusätzlich auf farbe + lack, 99. Jahrgang 11/1993, S.918 ff. ("Dynamische thermomechanische Analyse an freien Lackfilmen"), und die dortigen weiteren Quellenangaben hingewiesen, worauf hier Bezug genommen wird. Im Rahmen der Erfindung kann die Messung nach den vorstehenden Methoden durchgeführt werden. Die erfindungsgemäßen Überzugsmittel basieren auf Aminhärtern (I) und wasserverdünnbaren Epoxidharzen (II) und sind besonders geeignet zur Herstellung von Füllerschichten in der Mehrschichtlackierung.

In den erfindungsgemäßen wäßrigen Überzugsmitteln können als Aminhärter (I) beispielsweise übliche Amine, bevorzgut Polyamine, Epoxid-Amin-Addukte, Mannichbasen,Polyamidoamine und bevorzugt Epoxid-Aminourethan-Addukte, allein oder als Gemische eingesetzt werden.

Beispiele für Polyamine sind aliphatische Alkylen- und Polyalkylenamine, wie Diethylentriamin, Triethylentetramin, Tetraethylenpentamin, Pentaethylenhexamin, Propylendiamin, Dipropylentriamin, ferner 2,2,4- und/oder 2,4,4-Trimethylhexamethylendiamin, Bis-(3-aminopropyl)-amin, 1,4-Bis-(3'-aminopropyl)-piperazin, N,N-Bis(3-aminopropyl)ethylendiamin, Neopentandiamin, 2-Methyl-1,5-pentandiamin, 1,3-Diaminopentan, Hexamethylendiamin, sowie cycloaliphatische Amine wie 1,2-bzw. 1,3-Diaminocyclohexan, 1,4-Diamino-3,6-diethylcyclohexan, 1,2-Diamino-4-ethylcyclohexan, 1,4-Diamino,3,6-diethylcyclohexan, 1-Cyclohexyl-3,4-diaminocyclohexan, Isophorondiamin und Umsetzungsprodukte davon, 4,4'-Diaminodicyclohexylmethan und -propan, 2,2-Bis-(4-aminocyclohexyl)-methan und - propan, 3,3'-Dimethyl-4,4'-diaminodecyclohexylmethan, 3-Amino-1-cyclohexylaminopropan, 1,3- und 1,4-Bis-(aminomethyl)-cyclohexan.

Weitere Beispiele sind araliphatische Amine; es können insbesondere solche eingesetzt werden, bei denen aliphatische Aminogruppen vorhanden sind, z.B. meta- und para-Xylylendiamin.

Außer den oben genannten Systemen können als Aminhärter beispielsweise auch wasserlösliche Polyalkylenpolyetherdi- und polyamine eingesetzt werden. Polyalkrlenpolyetheramine haben bevorzugt eine gewichtsmittlere Molmasse (Mw) von 200 bis 20000 g/mol. Die Basis der Polyalkylenpolyethereinheiten können beispielsweise Ethyl-, Propyl- und Butyleinheiten sein. Es kann sich hierbei beispielsweise um Reaktionsprodukte von Ethylenoxid, Propylenoxid, Butylenoxid und/oder Amylenoxid mit einwertigen und/oder mehrwertigen Alkoholen oder um Polyether auf der Basis von Tetrahydrofuran handeln.

Als Amin-Epoxid-Addukte kommen beispielsweise Umsetzungsprodukte von Polyaminen, beispielsweise aliphatischen und/oder cycloaliphatischen und/oder araliphatischen Polyaminen wie z.B. Ethylendiamin, Propylendiamin, Hexamethylendiamin, 2,2,4- und 2,4,4-Trimethylhexamethylendiamin, meta-Xylylendiamin und/oder Bis-(aminomethyl)-cyclohexan mit endständigen Mono- oder Polyepoxiden, wie z.B. Propylenoxid, Hexenoxid, Cyclohexenoxid, oder mit Gycidylethern wie Phenylglycidylether, tert.-Butylglycidylether, Ethylhexylglycidylether, Butylglycidylether oder mit Gylcidylestern, wie beispielsweise dem Glycidylester der Versatisäure oder mit Polyglycidylethern und -estern in Betracht.

Geeignete Mannich-Basen können z.B. durch Kondensation von Polyaminen, vorzugsweise Diethylentriamin, Triethylentetramin, Isophorondiamin, 2,2,4- bzw. 2,4,4-Trimethylhexamethylendiamin, 1,3- und 1,4-Bis-(aminomethyl)-cyclohexan, insbesondere meta- und para-Xylylendiamin mit Aldehyden, vorzugsweise Formaldehyd, und ein- oder mehrwertigen Phenolen mit mindestens einer gegenüber Aldehyden reaktiven Kernposition, beispielsweise den verschiedenen Kresolen und Xylenolen, para-tert.-Butylphenol, Resorcin, 4,4'-Dihydroxydiphenylmethan, 2,2-Bis(4'-hydroxyphenyl)-propan, vorzugsweise aber Phenol hergestellt werden.

Polyamidoamine, die ebenfalls als Härter verwendet werden können, werden beispielsweise durch Umsetzung von Polyaminen mit Mono- oder Polycarbonsäuren, z.B. dimerisierten Fettsäuren, erhalten.

In den erfindungsgemäßen Überzugsmitteln bevorzugt einsetzbare Aminhärter sind solche auf Basis von Epoxid-Aminourethan-Addukten. Die Epoxid-Aminourethan-Addukte sind erhältlich durch Umsetzung von
A) einem oder mehreren Aminourethanen, die erhältlich sind durch Umsetzung von
   a) Verbindungen mit mindestens einer 2-Oxo-1,3-dioxolan-Gruppe und/oder 2-Oxo-1,3-dioxan-Gruppe, im folgenden als cyclische Carbonatgruppe bezeichnet, mit
   b) einem oder mehreren Aminen mit mindestens einer primären Aminogruppe, wobei das Verhältnis der Anzahl der cyclischen Carbonatgruppen zu der Anzahl der primären Aminogruppen 1:10 bis 1:1,1 beträgt,
   mit
B) einer oder mehreren wasserverdünnbaren Epoxidverbindungen, die erhältlich sind durch Umsetzung von
   c) einem oder mehreren Polyalkylenpolyethern mit einer primären und/oder sekundären α-ständigen Aminogruppe und einer ω-ständigen Alkyl- oder Arylethergruppe und/oder einem oder mehreren Polyalkrlenpolyethern mit zwei primären und/oder sekundären α,ω-ständigen Aminogruppen, jeweils mit einer gewichtsmittleren Molmasse (Mw) von 200 bis 20000 g/mol
      mit
   d) einer oder mehreren Epoxidverbindungen mit mindestens 2 Epoxidgruppen pro Molekül und einem Epoxidäquivalentgewicht von 100 bis 2000, wobei das Verhältnis der Anzahl der primären und/oder sekundären Aminogruppen der Komponente c) zu den Epoxidgruppen der Komponente d) 1:2 bis 1:20, vorzugsweise 1:4 bis 1:8 beträgt und das Epoxidäquivalentgewicht der aus c) und d) erhaltnenen Kondensationsprodukte zwischen 150 und 8000 liegt
   und
C) gegebenenfalls einem oder mehreren von A) unterschiedlichen Aminen mit mindestens einer primären Aminogruppe.

Die in der Komponente A)a) eingesetzten cyclische Carbonatgruppen enthaltenden Verbindungen sind insbesondere solche, die eine, vorzugsweise zwei oder mehrere 2-Oxo-1,3-dioxolan- oder 2-Oxo-1,3-dioxan-Gruppen enthalten, wobei diese bevorzugt endständig sind. Bei der Komponente A)b) handelt es sich um Amine, welche mindestens primäre, vorzugsweise mehrere primäre und gegebenenfalls noch sekundäre und tertiäre Aminogruppen enthalten. Bei den Polyalkylenpolyethern der Komponente B)c) handelt es sich vorzugsweise um solche mit alphaendständiger sekundärer oder primärer Aminogruppe und omegaendständiger Alkylether- oder Arylethergruppe; die Polyalkylenpolyether mit mindestens zwei primären und/oder sekundären Aminogruppen sind vorzugsweise solche mit alpha,omega-endständigen primären und/oder sekundären Aminogruppen. Bei der Herstellung der Komponente B) beträgt das Verhältnis der Anzahl der primären und sekundären Aminogruppen der Komponente c) zu der Anzahl der Epoxidgruppen der Komponente d) 1:2 bis 1:20, vorzugsweise 1:4 bis 1:8, das Epoxidäquivalentgewicht (Molmasse dividiert durch die Anzahl der vorhandenen Epoxidgruppen) der Komponente B) liegt bei 150 bis 8000, vorzugsweise bei 250 bis 1000.

Die Verbindungen (A) können für sich allein oder aber bevorzugt in Kombination mit üblichen Polyaminen (C) an hydrophile Epoxidharze (B) addiert und in dieser Form als Aminkomponente für die wäßrigen Epoxidharzsysteme eingesetzt werden.

Zur Herstellung der Aminourethane (A) können als Komponente (a) sämtliche cyclischen Carbonate eingesetzt werden, welche durch Umsetzung von Kohlendioxid mit Epoxidverbindungen nach bekannter Art und Weise (siehe z.B. WO-A-84/03701), DE-A-35 29 263 und DE-A-36 00 602) herstellbar sind. Vorzugsweise handelt es sich bei diesen Epoxidverbindungen um Polyglycidyläther auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart von sauer Katalysatoren). Die Epoxidäquivalentgewichte dieser Epoxidverbindungen liegen vorzugsweise zwischen 100 und 2000, insbesondere zwischen 100 und 350. Das Epoxidäquivalentgewicht ist die Molmasse, dividiert durch die Anzahl der Epoxidgruppen.

Eine ausführliche Aufzählung geeigneter Epoxidverbindungen findet sich in dem Handbuch "Epoxidverbindungen und Epoxidharze" von A.M. Paquin, Springer-Verlag, Berlin 1958, Kapitel IV und in Lee, Neville, "Handbook of Epoxy Resins", Mc Graw-Hill Book Co., 1967, Chapter 2. Die genannten Epoxidverbindungen können einzeln oder im Gemisch eingesetzt werden.

Als Komponente (a) können weiterhin die üblichen cyclischen Carbonate eingesetzt werden, welche durch Umsetzung von Kohlensäureestern, wie z.B. Dimethylcarbonat, Diethylcarbonat, Diphenylcarbonat, Ethylencarbonat oder Propylencarbonat mit Polyolen erhalten werden, wobei die Polyole mindestens vier Hydroxylgruppen tragen, von denen je zwei mit Kohlensäureestern in einer Umesterung zu cyclischen Fünfring- oder Sechsring-Carbonaten reagieren. Als mehrwertige Polyole sind beispielsweise zu nennen: Diglycerin, Triglycerin, Polyglycerin, Zuckeralkohole (z.B. Xylit, Mannit Erytherit), Di- und Trimethylolpropan, Di- und Trimethylolethan, Pentaerythrit, Dipentaerythrit. Digylcerin ist hierbei besonders bevorzugt.

Die Herstellung der cyclischen Carbonate aus den Polyolen geschieht in dem Fachmann geläufiger Weise, insbesondere durch Umsetzung der Polyole mit den Carbonaten im stöchiometrischen Verhältnis 1,0 : 1,0 bis 1,0 : 10,0 (Verhältnis von 1,2- oder 1,3-Glykolgruppen zu Carbonatgruppen), insbesondere unter Katalyse. Als Katalysatoren kommen z.B. basische Katalysatoren, wie zum Beispiel: Carbonate, Bicarbonate, Alkoholate, Carboxylate, Hydroxide oder Oxide der Alkali- und Erdalkalimetalle in Frage, wie auch Lewis-saure Substanzen, wie zum Beispiel organische Verbindungen des zwei- oder vierwertigen Zinns oder Titans, zum Beispiel Zinn-(II)-octoat, Zinn-(II)-laureat, Dibutylzinnoxid oder Titantetrabutylat. Die Katalysatoren können z.B. in einer Menge von 0,01 bis 1,0 Gew.-% bezogen auf Polyol und Kohlensäureester zugesetzt werden.

Bei der Herstellung der Aminourethane (A) können als Amin-Komponente (b) Amine, vorzugsweise Polyamine eingesetzt werden, welche zur Reaktion mit den Carbonatgruppen von (a) befähigte primäre Aminogruppen enthalten. Es kann sich dabei beispielsweise um Polyamine, Amin-Epoxid-Addukte und/oder modifizierte Derivate hiervon handeln. Beispielsweise können als Polyamine und/oder Epoxid-Amin-Addukte solche Verbindungen eingesetzt werden, wie vorstehend für die Komponenten (I) bereits beschrieben wurden.

Die genannten Amine können allein oder als Gemische verwendet werden. Bevorzugt erfolgt ihre Auswahl so, daß mindestens eine, vorzugsweise jedoch mehr als eine freie primäre Aminogruppe enthalten.

Die Umsetzung der Komponenten (a) und (b) erfolgt im allgemeinen in den erforderlichen stöchiometrischen Verhältnissen nach üblichen Methoden bei erhöhten Temperaturen, gegebenenfalls unter Verwendung inerter Lösemittel. Die Umsetzung in Gegenwart von gegenüber der Cyclocarbonatgruppe inerten Lösungsmitteln stellt eine bevorzugte Verfahrensvariante dar. Bei der stöchiometrischen Bewertung der Ausgangsprodukte als auch der Endprodukte und zur Reaktionskontrolle werden die Aminzahl (Titration mit Perchlorsäure) und die Cyclocarbonat-Aquivalenzzahl (Titration mit Kaliumhydroxydlösung) zugrunde gelegt. Bei der Umsetzung der Komponenten (a) und (b) können die Aminverbindungen einzeln oder als Gemische, gleichzeitig oder zeitlich hintereinander der Reaktion zugeführt werden, gegebenenfalls gelöst in inerten Lösemitteln.

Bei der Umsetzung werden die Reaktions- und Verfahrensbedingungen so mild gewählt, daß die Cyclocarbonatgruppen der Komponente (a) nur mit den primären Aminogruppen der Komponente (b) reagieren, ohne daß auch entsprechende Reaktionen mit den möglicherweise vorhandenen sekundären Aminogruppen stattfinden, welche deutlich reaktionsträger sind. Dies kann nach üblichen, dem Fachmann geläufigen Methoden erzielt werden. Die Reaktionstemperaturen werden dabei so niedrig wie möglich gehalten, um auch zu vermeiden, daß Urethanstrukturen von Polyalkylenpolyaminen zu cyclischen Harnstoffderivaten spalten.

Als inerte Lösemittel kommen z.B. aromatische Kohlenwasserstoffe wie Xylol und Toluol, Alkohole wie Methanol, Ethanol, Butanole, Pentanole, 1,2-Propandiol, Ethylenglykol und Glykolether wie Methoxyethanol, Ethoxyethanol, Methoxypropanol, Butoxyethanol, Methoxybutanol, Glykoldimethylether, und Diglykoldimethylether usw. in Frage. Bevorzugt sind solche Lösungsmittel zu wählen, welche sich nach erfolgter Reaktion leich abdestillieren lassen oder später in der wäßrigen Formulierung nicht stören. Die Lösemittel sollten im letzteren Falle lediglich in einer Menge verwendet werden, die zur Erniedrigung der Viskosität auf ein handhabbares Maß ausreicht. Ester und Ketone sind aufgrund ihrer potentiellen Reaktivität gegenüber den Komponenten nur bedingt geeignet.

Die Reaktionstemperatur bei der Umsetzung der Komponenten a1) und a2) leigt im Bereich von 50°C bis 150°C, nach unten beschränkt durch Löslichkeit und Viskosität, nach oben durch Neigung zu Neben- und Folgereaktionen sowie Siedepunkt des Lösemittels. Bevorzugt arbeitet man zwischen 80°C und 130°C. Katalysatoren werden für diese Umsetzung nicht benötigt. So laufen Reaktionen zwischen Carbonaten und primären Aminen schon bei Raumtemperatur zügig ab; bei den beschriebenen Systemen sind allerdings höhrere Temperaturen nötig, da die Produkte oft auch in Lösemitteln eine hohe Viskosität aufweisen.

Die gewählten Mengenverhältnisse (a) : (b) werden so gewählt, daß aminofunktionelle Reaktionsprodukte (A) gebildet werden, welche über diese Funktioneen zur Reaktion mit den Gylcidylgruppen der Epoxidharze (B) befähigt sind. Vorzugsweise sollen im Reaktionsprodukt mindestens eine primäre, bevorzugt mehrere primäre Aminogruppen im Molekül vorliegen. Durch Variation der Mengenverhältnisse lassen sich Produkte von oligomerem bis hin zu polymerem Charakter gewinnen, wobei Oligomere besonders bevorzugt sind. Somit sind bevorzugt Mengenverhältnisse von cyclischem Carbonat (a) zu Polyamin (b) so gewählt, daß das Verhältnis der Anzahl der cyclischen Carbonatgruppen zur Anzahl der primären Aminogruppen von 1,0 : 5,0 bis 1,0 : 1,5 für die Bildung von Oligomeren liegt.

Zur Herstellung der wasserverdünnbaren Epoxidverbindungen (B) geeignete Komponenten c) sind Polyalkylenpolyether mit endständiger sekundärer oder primärer Aminogruppe und endständiger Alkyl- oder Arylethergruppe und/oder Polyalkylenpolyetheramine mit endständigen sekundären oder primären Aminogruppen. Die Polyalkylenpolyetheramine haben bevorzugt eine gewichtsmittlere Molmasse (Mw) von 200 bis 20000 g/mol. Die Basis der Polyalkylenpolyethereinheiten können beispielsweise Ethyl-, Propyl- oder Butyleinheiten sein. Es kann sich hierbei beispielsweise um Reaktionsprodukte von Ethylenoxid, Propylenoxid, Butylenoxid bzw. Amylenoxid mit einwertigen und/oder mehrwertigen Alkoholen oder um Polyether auf der Basis von Tetrahydrofuran handeln. Bevorzugt sind Polyalkylenpolyetheramine auf Basis von Ethylenoxid oder Propylenoxid. Besonders bevorzugt sind Polyalkylenpolyethermonoamine.

Beispielsweise können als Komponente c) solche Produkte eingesetzt werden, wie sie unter dem Handelsnamen Jeffamine von der Firma Huntsman Corporation Belgium N.V. vertrieben werden.

Zur Herstellung der wasserverdünnbaren Epoxidverbindungen (B) geeigenete Polyepoxidverbindungen d) sind beispielsweise solche, wie sie vorstehend zur Herstellung der cyclischen Carbonate (a) beschrieben wurden. Aus der großen Zahl einsetzbarer polyfunktioneller Epoxidverbindungen seien beispielhaft genannt: die Epoxide mehrfach ungesättigter Kohlenwasserstoffe (z.B. Vinylcyclohexan, Dicyclopentadien, Cyclohexadien, Butadien), Epoxidether mehrwertiger Alkohole (z.B. Ethylen-, Propylen-, Butylenglykole, Glycerin, Pentaerythrit, Sorbit, Polyvinylalkohol), Epoxidether mehrwertiger Phenole (z.B. Resorcin, Hydrochinon, Bis-(4-Hydroxyphenyl)-methan, Bis-(4-hydroxy-3-methylphenyl)-methan, Bis-(4-hydroxy-3,5-dibromphenyl)-methan, 1,1-Bis-(4-hydroxyphenyl)-ethan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 1,1-Bis-(4-hydroxyphenyl)-cyclohexan, Bis-(4-hydroxyphenyl)-cyclohexylmethan, sowie Epoxide, welche nach üblichen Verfahren aus mehrfach ungesättigten Carbonsäuren oder einfach ungesättigten Carbonsäureerstern ungesättigter Alkohole hergestellt worden sind.

Bevorzugt eingesetzte Epoxidverbindungen sind Polyphenol-Glycidylether, z.B. die Reaktionsproudkte aus Epichlorhydrin und Bisphenol A oder Bisphenol F. Derartige Epoxidharze haben ein Epoxid-Äquivalent von 160 bis 500. Es können auch Gemische entsprechender Epoxidverbindungen eingesetzt werden.

Als Komponente (C) können Aminverbindungen, bevorzugt Polyamine, eingesetzt werden, die mindestens eine primäre und gegebenenfalls noch sekundäre oder tertiäre Aminogruppen enthalten. Geeignet sind beispielsweise sämtliche Amine wie sie vorstehend für Komponente b) genannt wurden.

Die Aminornrethane (A) werden für sich allein oder gegebenenfalls in Abmischung mit weiteren Aminen (C) mit den wasserverdünnbaren Epoxidharzen (B) umgesetzt; wobei das Verhältnis der Anzahl der primären Aminogruppen von Komponente (A) zur Anzahl der primären Aminogruppen von Komponente (C) bevorzugt 20:1 bis 1:20 und das Verhältnis der Anzahl aller Aminwasserstoffatome aus (A) und (C) zur Anzahl der Epoxidgruppen in (B) bevorzugt 2:1 bis 20:1, besonders bevorzugt 2:1 bis 5:1 beträgt.

Die Herstellung der erfindungsgemäß verwendbaren Epoxid-Aminourethan-Addukte kann nach üblichen Verfahren erfolgen. Besonders bevorzugt sind die folgenden Varianten:
1. Ein Polyol wird vorgelegt und mit Kohlensäurediester zum Cyclocarbonat (a) umgesetzt. Nun erfolgt die Weiterreaktion mit einer ersten Menge einer Aminverbindung (b), welche gegebenenfalls im Überschuß eingesetzt wird, in beschriebener Weise zum Aminourethan (A), wobei gegebenenfalls geeignete inerte Lösemittel zugegen sind. Hierauf erfolgt gegebenenfalls die Zugabe einer zweiten Menge von Komponente (b), welche in ihrer Zusammensetzung gleich oder verschieden sein kann. Das Produkt, welches ausschließlich aus Aminourethan (A) oder gegebenenfalls aus einem Gemisch von (A) und überschüssigen Aminen besteht, wird nun mit dem hydrophilen Epoxidharz (B) umgesetzt. Dabei muß gewährleistet werden, daß genügend freie Aminogruppen verbleiben, welche zur Härtung dienen.
2. Isolierte Aminourethane (A) werden zusammen mit Aminen gemäß (b) und gegebenenfalls geeigneten inerten Lösemitteln homgenisiert und mit einem Unterschuß an hydrophilem Epoxidharz (B) derart umgesetzt, daß für die Härtung ausreichend viele freie Aminogruppen übrig bleiben.
3. Das hydrophile Epoxidharz (B) wird mit einem Überschuß an Polyaminen (b) umgesetzt und das mit nicht reagierten Aminen gemischte Epoxid-Amin-Addukt mit Carbonatverbindungen gemäß (a) wie beschrieben derart umgesetzt, daß genügend freie Aminogruppen für die Härtung verbleiben.

Die nach den verschiedenen Verfahren enthaltenen Epoxid-Aminourethan-Addukte können nach Bedarf mit wasserverdünnbaren Lösemitteln versetzt werden.

Die Epoxid-Aminourethan-Addukte (Umsetzungsprodukte aus A), B) und ggf. C) können als alleinige Härter oder im Gemisch mit weiteren Aminhärtern verwendet werden.

Als Epoxidharzkomponente (II) zur Formulierung der erfindungsgemäßen Überzugsmittel können beispielsweise übliche wäßrige Epoxidharzsysteme eingesetzt werden. Bei den Epoxidharzen kann es sich beispielsweise um solche Epoxidverbindungen handeln, wie sie für Komponente d) beschrieben wurden. Bevorzugt werden modifizierte nichtionisch stabilisierte Epoxidharze eingesetzt, wie sie in der DE-A-36 43 751 beschrieben sind. Weiterhin ist der Einsatz üblicher Epoxidharze, wie sie dem Fachmann für wäßrige zweikomponentige Epoxid/Amin-Systeme geläufig sind, möglich. Das können handelsübliche Di- oder Polyepoxide sein. Das sind filmbildende Epoxidharze, die als wäßrige Dispersion oder als wasserverdünnbares Harz vorliegen. Beispiele für solche Polyepoxide sind Polyglycidylether auf Basis von aliphatischen oder aromatischen Diolen wie Bisphenol A, Bisphenol F oder Polyalkylenglykol.

Durch die Auswahl der in Frage kommenden Aminhärter und Epoxidverbindungen können die Eigenschaften der fertigen Überzugsmittel so gesteuert werden, daß sie das vorstehend genannte Speichermodul/Temperatur-Verhalten aufweisen.

Die erfindungsgemäßen Überzugsmittel können übliche Pigmente und Füllstoffe, z.B. Titanoxid, Bariumsulfat, Aluminiumsilikat, Siliciumdioxid, Zinkphosphat, Ruß, farbgebende und/oder transparente organische oder anorganische Pigmente, sowie übliche lackübliche Additive enthalten. Beispiele für letztere sind Antikratermittel, Anitschaummittel, Verlaufsmittel, Katalysatoren, Haftvermittler. Es können auch organische Lösemittel, bevorzugt wassermischbare Lösemittel, im Überzugsmittel vorhanden sein. Deren Anteil soll bevorzugt unter 10 Gew.-% betragen. Die Pigmente, Füllstoffe und Additive werden in üblichen, dem Fachmann geläufigen Mengen, zugesetzt.

Die Pigmente und/oder Füllstoffe können entweder in der Epoxidharzkomponente oder in der Aminkomponente dispergiert werden. Bevorzugt ist die Dispergierung in der Aminkomponente.

Bei den erfindungsgemäßen Überzugsmitteln handelt es sich um zweikomponentige Überzugsmittel, d.h. die Epoxid- und die Aminkomponente werden getrennt voneinander gelagert und erst kurz vor der Applikation miteinander vermischt. Das Äquivalentverhältnis Aminogruppen zu Epoxidgruppen beträgt dabei 5:1 bis 1:5, bevorzugt 1,5:1 bis 1:1,5.

Die erfindungsgemäßen Überzugsmittel sind besonders geeignet zur Herstellung von Füller- und/oder Grundierungsschichten eines lufttrocknenden oder forciert-trocknenden Mehrschichtüberzuges. Sie können jedoch auch bei höheren Temperaturen von z.B. 80 bis 140°C gehärtet werden. Bevorzugt sind jedoch Temperaturen unter 80°C. Sie eignen sich für die Fahrzeug- und Industrielackierung, insbesondere für die Reparaturlackierung von Fahrzeugen und Fahrzeugteilen.

Die Überzugsmittel können nach bekannten Verfahren wie z.B. Spritzen, Tauchen, Rollen oder Rakeln, appliziert werden. Sie können auf ein gegebenenfalls vorbehandeltes Substrat als solches oder auf übliche Grundierungen aufgebracht werden. Sie haften gut auf den verschiedensten Untergründen, wie z.B. blankes Stahlblech, geschliffen, Polyvinylbutyralprimer, 2K-Epoxid-Grundierungen, angeschliffene Werks- oder Altlackierungen. Die erfindungsgemäßen Überzugsmittel können beispielsweise bei Raumtemperatur getrocknet werden oder beispielsweise nach einer Ablüftzeit von 10 bis 30 Minuten einer Trocknung während beispielsweise 30 bis 60 Minuten bei 60°C unterzogen werden.

Nach dem Vernetzen erhält man homogen beschichtete Substrate mit glatten störungsfreien Oberflächen. Die Überzüge zeigen keine Nadelstiche. Die erfindungsgemäßen Überzugsmittel zeigen im Vergleich zu bekannten wäßrigen Epoxid/Polyamin-Systemen eine ausgezeichnete Schleifbarkeit. Schon nach kurzer Trockenzeit sind die Überzüge problemlos naß und insbesondere auch trocken schleifbar. Das gilt auch für höhere Schichtdicken. Es erfolgt ein ausreichender Materialabtrag. Aufgrund der verminderten Thermoplastizität wird kein Zusetzen des Schleifmaterials, insbesondere des Schleifpapiers beobachtet.

Die Überzugsmittel zeigen eine ausreichende Verarbeitungszeit von mindestens 120 min und eine hohe Standfestigkeit an senkrechten Flächen.

Nach dem Trocknen und Schleifen können die erfindungsgemäßen Überzugsmittel problemlos mit üblichen Decklacken überlackiert werden. Dabei kann es sich um Einschichtdecklacke, z.B. auf 2K-Acrylat/Polyisocyanat-Basis, oder um übliche Basecoat/Clearcoat-Aufbauten handeln. Es kann mit lösemittelbasierenden oder wasserverdünnbaren Überzugsmitteln überlackiert werden.

Die Erfindung betrifft auch Verfahren zur Herstellung von Mehrschichtüberzügen bzw. die Verwendung der Überzugsmittel zur Herstellung von Mehrschichtüberzügen, wobei insbesondere die Füller- und/oder Grundierungsschichten von Mehrschichtüberzügen durch die erfindungsgemäßen Überzugsmittel erstellt werden.

Die Erfindung soll an den folgenden Beispielen näher erläutert werden.

### 1. Beispiel

### Herstellung von Aminhärtern auf Basis von Aminourethanen

### 1.1 Herstellung von cyclischen Carbonaten (Komponente a)

a) 1,0 val Epoxidverbindung werden in einer 70 %igen Lösung aus Methoxypropanol mit 0,2 Gew.-% Kaliumiodid und 0,2 Gew.-% Triphenylphosphan bis zum Sieden erhitzt. In die Lösung leitet man gasförmiges Kohlendioxid bei 1 bar Druck ein, bis ein Umsatz von 97 %, gemessen an der Zunahme des Epoxidäquivalentes, überschritten wird. Das Einleiten von Kohlendioxid wird abgebrochen und das Lösemittel im Vaccum (50 mbar, 130°C) abdestilliert.
b) 1,0 val einer 1,2- (oder 1,3-)Dihydroxyverbindung werden mit 1,2 mol Dimethylcarbonat und 0,5 Gew.-% Kaliumcarbonat unter Rückfluß erwärmt. Der Siedepunkt fällt dabei von 90°C (Siedepunkt des reinen Dimethylcarbonats) auf 64°C (Methanol). Nach 120 Minuten Sieden bei 64°C wird überschüssiges Dimethylcarbonat und Methanol abdestilliert, zuletzt wird 60 Minuten ein Vakuum von 50 mbar bei einer Temperatur von 130°C gehalten.

### 1.2. Herstellung von Aminourethanen (Komponente A) aus Carbonaten a) und Aminen b)

Das Amin oder die Aminmischung wird mit Lösemittel (wahlweise) vorgelegt und auf 70°C erwärmt. Bei dieser Temperatur wird vorsichtig das Carbonat, in einem Lösemittel gelöst (wahlweise), hinzugetropft (siehe Tabelle 6.1). Die Zutropfgeschwindigkeit richtet sich nach der nun einsetzenden exothermen Reaktion, bei der die Temperatur 140°C nicht übersteigen darf (Kühlen und Vermindern der Zutropfgeschwindigkeit). Nach dem Zutropfen wird auf 140°C gehalten, bis die Reaktion, gemessen an der Aminzahl, einen Umsatz von 90% überschreitet. Nach dem Abkühlen auf 90°C wird mit deionisiertem Wasser auf eine 80 % wäßrige Löung verdünnt.

### Beispiele siehe Tabelle I

### 1.3. Herstellung von Emulgatoren (Komponente B) auf Basis von Epoxidharzen d) und aminoterminierten Polyalkylenpolyethern c)

Die berechnete Menge an Epoxidharz (Art und Menge siehe Tabelle II) und aminoterminiertem Polyalkylenether (bekannt unter dem Handelsnamen Jeffamine, von der Firma Huntsman Corporation Belgium N.V. (Belgien)) werden bei 120°C umgesetzt, bis das berechnete Epoxidäquivalent erreicht wird.

### Beispiele siehe Tabelle II

### 1.4. Herstellung der Aminhärter

Die in der Tabelle III angegebenen Mengen an monomerem Amin oder einer Mischung aus monomeren Aminen werden mit Aminourethan homogen bei 40°C vermischt. Im Temperaturbereich von 60 - 80°C setzt man vorsichtig die gewünschte Menge an epoxy-funktionellem Emulgator hinzu. Nach der Zugabe wird weiter in diesem Temperaturbereich gehalten. Durch Titration der Aminzahlen mit/ohne Tetrabutylammoniumbromid stellt man den Umsatz der Reaktion fest. Bei einer Differenz der Aminzahlen von ≤ 1 bricht man die Addition ab und verdünnt auf 80 % Lieferform mit deionisiertem Wasser. Damit ist der Epoxidhärter für seinen bestimmungsgemäßen Gebrauch fertiggestellt.

### Tabellarische Übersicht der wäßrigen Aminhärter

I. Tabelle der Aminourethane
II. Tabelle der Emulgatoren
III. Tabelle der wäßrigen Aminhärter

### Abkürzungen:

| Abk. für Amine | |
|---|---|
| MPDA | 2-Methyl-1,5-pentandiamin (1) |
| mXDA | meta-Xylylendiamin (2) |
| TMD | 2,2,4-(2,4,4)-Trimethyl-1,6-hexandiamin (3) |
| TCD-DA | Tricyclodecandiamin (5) |
| IPDA | Isophorondiamin (3) |

| Abk. für Epoxidharze und deren Carbonate | |
|---|---|
| EP 140 | Beckopox EP 140 (6) |
| DG | Diglycerindicarboant |

| Abk. für weitere Begriffe | |
|---|---|
| EV | Epoxidäquivalentgewicht |
| AZ | Aminzahl (mg KOH/g |
| Tg | Glastemperatur |
| η | Viskosität |

### 2. Beispiel

### Herstellung von Füllern

### Aus den in Tabelle III angegebenen wäßrigen Aminhärtern werden wäßrige 2K-Füller (Füller 1 und Füller 2) formuliert.

Dazu werden jeweils 48,5 g der wäßrigen Härter W 1 und W 2 und 350 g VE-Wasser gut miteinander vermischt. Zu der Mischung werden 13 g eines handelsüblichen Polyurethanverdickers und 1,3 g eines Korrosionsinhibitors gegeben und ebenfalls gut vermischt.

In diesen Mischungen werden folgende Pigmente und Füllstoffe in üblicher Weise dispergiert:

| Füller 1: | | Füller 2: | |
|---|---|---|---|
| 39 g | Siliciumdioxid | 48 g | Siliciumdioxid |
| 110 g | Bariumsulfat | 170 g | Bariumsulfat |
| 117 g | Aluminiumsilikat | 140 g | Aluminiumsilikat |
| 128 g | Titandioxid | 154 g | Titandioxid |
| 6 g | Eisenoxidgelb | 8 g | Eisenoxid |

Zu den so erhaltenen Polyaminkomponenten werden kurz vor der Applikation folgende Mengen eines handelsüblichen wäßrigen Epoxidharzes (53%ig, Beckopox EP 384 w der Fa. Hoechst AG) zugegeben und jeweils beide Komponenten intensiv durch Rühren vermischt:

| wäßriger Härter | Menge an Epoxidharz |
|---|---|
| W1 | 311 g (Füller 1) |
| W2 | 391 g (Füller 2) |

### 3. Beispiel

### Herstellung von Vergleichsfüllern

Es wird ein Füller entsprechend DE-A-43 44 510, Beispiel 6 hergestellt (Füller 3).

Es wird ein Füller entsprechend DE-A-41 23 860, Beispiel 3 hergestellt (Füller 4), wobei die Pigmentpaste 1 bei sonst gleichen Anteilen der Bestandteile mit folgender Pigment/Füllstoff-Kombination hergestellt wird:
- 450 g: Siliciumdioxid
- 1600 g: Bariumsulfat
- 1300 g: Aluminiumsilikat
- 1500 g: Titandioxid
- 60 g: Eisenoxid

### Durchführung der dynamischen thermomchanischen Analyse zur Bestimmung des Speichermoduls E'

Die Speichermodule E' der hergestellten Füller-Überzugsmittel (Füller 1-4) werden in Abhängigkeit von der Temperatur mit einen Dynamischen Thermomechanischen Analysator DMA 7 von der Fa. Perkin Elmer bestimmt.
- Meßbedingungen:: Temperaturbereich: -50°C bis 150°C
Aufheizgeschwindigkeit 10°C/min
Frequenz: 1 Hz
Glaszustand: Amplitudenregelung max. 2 µm
außerhalb Glaszustand: Kraftregelung (statische Kraft 20-30 mN, dynamische Kraft 15-25 mN)

Zur Analyse werden die Füllerüberzugsmittel (Füller 1-4) zunächst in einer Schichtdicke von 60 µm appliziert, 60 Minuten bei 60°C getrocknet, anschließend abgelöst und dann als freier Film im Zugversuch vermessen.

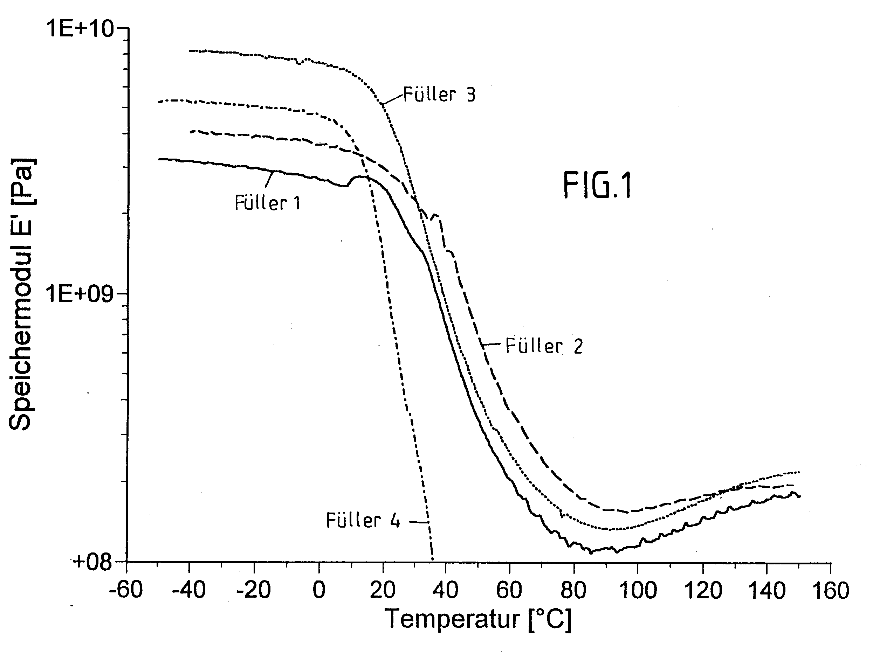

Die Meßergebnisse sind in der beigefügten Figur 1 aufgeführt.

### Applikation der Überzugsmittel

Zur Beurteilung der lacktechnischen Eigenschaften werden die Füller-Überzugsmittel (Füller 1-4) jeweils auf mit Kataphoresegrundierung vorbeschichtete Stahlsubstrate aufgespritzt und 60 Minuten bei 60°C getrocknet. Nach dem Trocknen und Schleifen werden die Füllerschichten jeweils mit einem üblichen lösemittelbasierenden 2K-Decklack (Basis Acrylat/Polyisocyanat) überlackiert.

Die Füllerüberzugsmittel 1 und 2 zeigen jeweils einen ausgezeichneten Verlauf. Die Oberflächenqualität ist sehr gut. Es sind keine Oberflächendefekte (Nadelstiche, Blasen) erkennbar, auch nicht nach Überlackieren mit dem Decklack. Die erhaltenen Füllerschichten (Füller 1 und 2) sind trocken und naß bei Schichtdicken von 30 bis 130 µm sehr gut schleifbar.

Zur Beurteilung der Schleifbarkeit wird als ein Kriterium der Materialabtrag herangezogen. Dazu wird mit einer handelsüblichen Exzenterschleifmaschine (mit 2 kg beschwert, Schleifpapier P 400, Durchmesser des Schleiftellers 20 cm) 30 s lang geschliffen und anschließend der Abtrag gravimetrisch bestimmt.

Der Vergleich der untersuchten Füller ist in der folgenden Tabelle dargestellt.

| Füller | Oberflächenqualität | Schleifbarkeit Zusetzen des Schleifpapiers | Materialabtrag |
|---|---|---|---|
| 1 | sehr gut | nein | 1,0 g |
| 2 | sehr gut | nein | 1,2 g |
| 3 (Vergleich) | gut | nein | 0,4 g |
| 4 (Vergleich) | gut | ja | 0,2 g |

**Tabelle I**

| Tabelle der Aminourethane (Komponente A) | | | | | | | | |
|---|---|---|---|---|---|---|---|---|
| Bez. | Amin 1 b) | Amin 2 b) | Carbonat a) | Methode | Verhältnis # | Aminourethan AZ | η mPa.s/25°C | Tg |
| U1 | mXDA | TMD | DG | 2 | 2:1:2 | 164 | 2900 | 0 |
| U2 | mXDA | MPDA | DG | 2 | 2:1:2 | 166 | 2100 | 0 |

| | | | | | | | | |
|---|---|---|---|---|---|---|---|---|
| # als Verhältnis wird angegeben die Äquivalente des Amins 1 zu den Äquivalenten Aminogruppe des Amins 2 zu den Äquivalten Carbonat. | | | | | | | | |

**Tabelle II**

| Tabelle der Emulgatoren (Komponente B) | | | | | | | | |
|---|---|---|---|---|---|---|---|---|
| Bez. | d) Epoxidharz 1 | | d) Epoxidharz 2 | | c) Jeffamine | | Kennzahlen des Emulgators | |
| | Typ | Einwaage | Typ | Einwaage | Typ | Einwaage | EV | η mPA.s/25°C |
| E1 | EP 140 | 603 g | 0 | 0 | M-2070 | 440 g | 355 | 7300 |
| E2 | EP 140 | 603 g | 0 | 0 | M-1000 | 440 g | 420 | 9900 |

**Tabelle III**

| Tabelle der wäßrigen Härter | | | | | | | | | | |
|---|---|---|---|---|---|---|---|---|---|---|
| Bez. | C) Amin 1 | | C) Amin 2 | | A) Aminourethan | | B) Emulgator | | Wäßriger Härter | |
| | Typ | Einwaage | Typ | Einwaage | Typ | Einwaage | Typ | Einwaage | AZ | η mPa.s/25°C |
| W1 | mXDA | 1020 g | IPDA | 1190 g | U1 | 1436 g | E1 | 3550 g | 217 | 16,1 |
| W2 | mXDA | 1007 g | TCD-DA | 1358 g | U2 | 1515 g | E2 | 4200 g | 273 | 15,4 |

## Patentansprüche

1. Wäßriges Überzugsmittel, enthaltend
I) einen oder mehrere Aminhärter,
II) ein oder mehrere wasserverdünnbare Epoxidharze,
III) ein oder mehrere Pigmente und/oder Füllstoffe sowie
IV) Wasser und gegebenenfalls ein oder mehrere Lösemittel und/oder lackübliche Additive,
wobei die Zusammensetzung des Überzugsmittels so gewählt ist, daß ein aus dem Überzugsmittel gebildeter gehärteter freier Film mit einer Schichtdicke zwischen 30 und 80 µm in einem Temperaturbereich von -50°C bis 150°C einen Speichermodul E' von 10⁸ bis 5 x 10⁹ Pa aufweist.

2. Wäßriges Überzugsmittel nach Anspruch 1, dadurch gekennzeichnet, daß es einen Aminhärter I) auf der Basis von einem oder mehreren Polyaminen, Epoxid-Amin-Addukten, Mannichbasen, Polyamidoaminen und/oder Epoxid-Aminourethan-Addukten enthält.

3. Wäßriges Überzugsmittel nach Anspruch 2, dadurch gekennzeichnet, daß es als Härter auf der Basis eines Epoxid-Aminourethan-Addukts ein Umsetzungsprodukt enthält, das erhältich ist durch Umsetzung von
A) einem oder mehreren Aminourethanen, die erhältlich sind durch Umsetzung von
a) Verbindungen mit mindestens einer 2-Oxo-1,3-dioxolan-Gruppe und/oder 2-Oxo-1,3-dioxan-Gruppe, im folgenden als cyclische Carbonatgruppe bezeichnet, mit
b) einem oder mehreren Aminen mit mindestens einer primären Aminogruppe,
wobei das Verhältnis der Anzahl der cyclischen Carbonatgruppen zu der Anzahl der primären Aminogruppen 1 : 10 bis 1 : 1,1 beträgt, mit
B) einer oder mehreren wasserverdünnbaren Epoxidverbindungen, die erhältlich sind durch Umsetzung von
c) einem oder mehreren Polyalkylenpolyethern mit einer primären und/oder sekundären α-ständigen Aminogruppe und einer ω-endständigen Alkylether- oder Arylethergruppe und/oder einem oder mehreren Polyalkylenpolyethern mit zwei primären und/oder sekundären α,ω-endständigen Aminogruppen, jeweils mit einer gewichtsmittleren Molmasse (Mw) von 200 bis 20000
mit
d) einer oder mehreren Epoxidverbindungen mit mindestens zwei Epoxidgruppen pro Molekül und einem Epoxidäquivalentgewicht von 100 bis 2000, wobei das Verhältnis der Anzahl der primären und/oder sekundären Aminogruppen der Komponente c) zu den Epoxidgruppen der Komponente d) 1 : 2 bis 1 : 20 beträgt und das Epoxidäquivalentgewicht der aus c) und d) erhaltenen Kondensationsprodukte zwischen 150 und 8000 liegt,
und
c) gegebenenfalls einem oder mehreren von A) unterschiedlichen Aminen mit mindestens einer primären Aminogruppe.

4. Wäßriges Überzugsmittel nach Anspruch 3, dadurch gekennzeichnet, daß die Amine b) und gegebenenfalls die Amine C) voneinander unabhängig ausgewählt sind aus den Gruppen
b1) primäre Diamine,
b2) Amine mit drei oder mehr primären Aminogruppen,
b3) primäre Diamine, die weitere sekundäre und/oder tertiäre Aminogruppen enthalten,
b4) Amine mit drei oder mehr primären Aminogruppen, die weitere sekundäre und/oder tertiäre Aminogruppen enthalten.

5. Wäßriges Überzugsmittel nach Anspruch 3 oder 4, dadurch gekennzeichnet, daß die Amine b2) und gegebenenfalls die Amine (C) voneinander unabhängig ausgewählt sind aus der Gruppe der Polyalkylenpolyamine, der Polyoxyalkylenpolyamine, der Polyaminoalkylaromaten, der Cycloalkylenpolyamine und der Umsetzungsprodukte von Di- oder Polyaminen mit Verbindungen, die mindestens eine endständige Epoxygruppe aufweisen.

6. Wäßriges Überzugsmittel nach Anspruch 3, 4 oder 5, dadurch gekennzeichnet, daß die Verbindungen a) mit mindestens einer cyclischen Carbonatgruppe durch Umsetzung von Glycidylethern mehrwertiger Alkohole oder Phenole, deren Hydrierungsprodukten oder Novolaken mit Kohlendioxid erhältlich sind.

7. Wäßriges Überzugsmittel nach Anspruch 3, 4, 5 oder 6, dadurch gekennzeichnet, daß die Verbindungen a) mit mindestens einer cyclischen Carbonatgruppe durch Umsetzung von mehrwertigen Alkoholen mit Kohlensäureestern erhältlich sind.

8. Wäßriges Überzugsmittel nach einem der Ansprüche 3 bis 7, dadurch gekennzeichnet, daß bei der Synthese der Aminourethane das Verhältnis der Anzahl der cyclischen Carbonatgruppen zu der Anzahl der primären Aminogruppen 1 : 5 bis 1 : 1,5 beträgt.

9. Wäßriges Überzugsmittel nach einem der Anprüche 3 bis 8, dadurch gekennzeichnet, daß die Aminourethane (A) in Abmischung mit weiteren Aminen (C) eingesetzt werden; und zwar in einem Verhältnis der Anzahl der primären Aminogruppen von (A) zur Anzahl der primären Aminogruppen in (C) von 20 : 1 bis 1 : 20.

10. Verfahren zur Herstellung vom Mehrschichtüberzügen durch Auftrag einer Grundierungsschicht und einer Füllerschicht auf ein zu lackierendes Substrat und gegebenenfalls Auftrag einer oder mehrerer weiterer Überzugsmittelschichten, dadurch gekennzeichnet, daß als Grundierungsschicht und/oder Füllerschicht eine Schicht aus einem Überzugsmittel gemäß einem der Ansprüche 1 bis 9 aufgetragen wird.

11. Verwendung der Überzugsmittel nach einem der Ansprüche 1 bis 9 zur Herstellung von Grundierungen und/oder Füllerschichten bei Mehrschichtlackierungen, insbesondere in der Fahrzeug- und Fahrzeugteilelackierung.
